Europäisches Patentamt

European Patent Office

Office européen des brevets

(19)

(11) **EP 1 528 040 A1**

(12) **EUROPEAN PATENT APPLICATION**

(43) Date of publication:
**04.05.2005 Bulletin 2005/18**

(51) Int Cl.⁷: **C01B 3/16**, C01B 3/48,
C01B 3/56, B01D 53/047

(21) Application number: **03078403.7**

(22) Date of filing: **30.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **L'Air Liquide Société Anonyme à Directoire et Conseil de Surveillance pour l'Etude et Exploitation des Procédés Georges Claude**<br>**75321 Paris Cedex 07 (FR)**<br><br>(72) Inventors:<br>• **Fuentes, François**<br>**78110 Le Vesinet (FR)** | • **Gauthier, Pierre**<br>**94260 Fresnes (FR)**<br>• **Imbault, Raphaelle**<br>**91400 Orsay (FR)**<br>• **Marty, Pascal**<br>**75002 Paris (FR)**<br><br>(74) Representative: **Mellul-Bendelac, Sylvie et al**<br>**L'Air Liquide,**<br>**Service Propriété Intellectuelle,**<br>**75, Quai d'Orsay**<br>**75321 Paris Cedex 07 (FR)** |

(54) **Plant for a boosted hydrogen production utilising methanol**

(57)    Plant for the production of a hydrogen stream comprising at least: a unit for the generation of a syngas stream (1), a water gas shift reactor (2) capable of implementing the endothermic methanol steam reforming reaction: $CH_3OH + H_2O \rightarrow 3H_2 + CO_2$ for the production of a hydrogen rich stream (5), and a hydrogen purification unit.

FIG.1

EP 1 528 040 A1

## Description

The invention relates to the production of hydrogen and to plants capable of boosting a fuel-based hydrogen production.

Hydrogen production plants for the refining and chemical industries are generally based on the principle of steam reforming of hydrocarbons such as natural gas or naphta in order to generate a gas essentially containing carbon monoxide and hydrogen, followed by conversion of most of the CO formed by the water gas shift or WGS reaction and final purification, generally by adsorption of undesirable compounds.

These plants supply processes that operate continuously, and any inopportune shutdown of the hydrogen production may have major consequences as regards the economics of the downstream units. A high level of reliability in hydrogen supply is therefore demanded. This reliability constraint is common in the field of industrial gases, particularly for the delivery of nitrogen which is a fluid used *inter alia* for inerting plants and therefore for making them safe.

The solution provided to this reliability problem often consists in the case of industrial gases in installing storage tanks containing the gases in liquid form, allowing the necessary quantities to be supplied for several days. Moreover, these storage tanks also allow discrete demands for increased consumption to be met.

The storage approach, although theoretically conceivable in the case of hydrogen, cannot in general be carried out economically for various reasons, such as:

- excessively high energy to liquefy hydrogen, given the very low temperatures needed;
- a lack of synergy between the hydrogen liquefaction unit and the hydrogen production unit (in contrast to the case of air separation units (ASUs)); and
- a high cost of storing hydrogen.

The WGS reaction is described by the following equation:

$$CO + H_2O \rightarrow CO_2 + H_2 \qquad (1)$$

This slightly exothermic reaction is used for producing more hydrogen. Known WGS catalysts in industrial high-temperature shift (HTS) applications are high-temperature catalysts that are chromium-supported and iron-based, and they are sometimes enhanced with copper. The operational inlet temperature range for HTS catalysts is typically 340-360°C and with exit temperatures that are approximately 100°C higher. The operational inlet temperature range for low-temperature shift (LTS) catalysts is above 200°C (or 20°C above the dew point of the gas). The inlet temperature should be kept as low as possible. Further details on catalysts for shift reactions and operating temperature are given in Catalyst Handbook, 2. published by Manson Publishing Ltd. England 1996. In addition to these catalysts, Haldor Topsøe A/S markets a medium-temperature shift catalyst that is Cu-based and capable of operating at temperatures up to 310°C. Various vendors offer sulphur-tolerant catalysts for gasification-based plants. However, these plants are not widely used for hydrogen production.

Methanol is produced on a large scale, with more than 30 MM t/y. Basically methanol is produced in very large plants with capacities of more than 2000 metric tons per day (TPD) in places where natural gas is cheap. The production cost of methanol in places with cheap natural gas is estimated to be around 60-80 US$/t. In the future, it is expected that methanol will be available in large quantity and at a price that on an energy basis might be significantly lower than that of oil.

In recent years there have been many studies on methanol steam reforming for producing hydrogen, particularly hydrogen for fuel cells. The disadvantage of the steam reforming process is that the heat of reaction has to be supplied through a wall and such equipment becomes cumbersome.

Catalysts for low-temperature methanol steam reforming are based on copper or optionally noble metals. Some companies, for instance Haldor Topsøe A/S, offer commercial products.

US Patent No. 5 221 524 discloses a hydrogen production process in which a reformed gas is cooled before undergoing a low-temperature shift reaction catalysed by a copper catalyst with an inlet temperature of 205°C. Liquid methanol is fed dispersively to the shift converter and unconverted methanol is recycled to the methanol source and the shift reactor. The catalyst exhibits activity both for the low-temperature shift conversion of carbon monoxide and for the steam reforming reaction of methanol to hydrogen and carbon dioxide. The heat generated from the shift conversion reaction is utilized in order to increase the endothermic methanol decomposition reaction rate.

US Patent Application No. 2001/0038816 discloses a gas generator for generating hydrogen using a shift reactor supplied with a reformed gas and water containing small amounts of methanol for frost protection. The gas generator is connected to a fuel cell set-up.

JP Patent Application No. 59203702 discloses a hydrogen producing process in which methanol and steam are reacted in a shift reactor, the effluent gas is purified and hydrogen is removed. The remaining gases are burnt and the heat generated is used as heat source for methanol decomposition in the shift reactor.

JP Patent Application N°. 3254071 discloses a process for modifying alcohol and generating hydrogen for a fuel cell. Natural gas is reacted with air in a methanol modifier, and the heat generated is used for conversion of the methanol /water mixture.

The invention therefore consists in proposing a solution for boosting a process for producing hydrogen from a given hydrocarbon source so as to increase the availability of hydrogen produced, but also to alleviate any failure in generating the syngas.

It is an object of the invention to boost a hydrogen production using a catalyst capable of operating over a wide temperature range.

According to the invention, a plant is provided for the production of purified hydrogen, comprising at least a unit for the generation of a syngas, a water gas shift reactor, capable of implementing the endothermic methanol steam reforming reaction: $CH_3OH + H_2O \rightarrow 3H_2 + CO_2$, and a hydrogen purification unit.

When the water gas shift (WGS) reactor is fed by both methanol and syngas (or other carbon monoxide containing gas) streams, under isothermal conditions, the heat released by the exothermic WGS reaction balances the heat used for the endothermic methanol steam reforming reaction. The sensible heat in the feed streams may furthermore be used in the process whereby a significantly larger amount of methanol may be steam-reformed.

The catalyst used in the invention is capable of operating both (for instance at 200°C)at lower temperatures and at temperatures above 350°C. By using this catalyst in the process, the hydrogen production may be boosted by up to 100%. Alternatively, the process can be used to decrease the load on the reforming section. The capacity of ammonia plants may also be increased by applying the process of the invention in such a plant.

The endothermic methanol steam reforming reaction:

$$CH_3OH + H_2O \rightarrow 3H_2 + CO_2 \qquad (2)$$

obtains the necessary heat of reaction from the sensible heat in the gas as well as from the latent heat of the WGS reaction. The catalyst used in the process of the invention tolerates the maximum inlet temperature and is still active at a much lower temperature, this being primarily dictated by the desire to keep the outlet methanol concentration as low as possible (typically in the 240-320°C temperature range).

The invention is applicable to a hydrogen plant on any scale. In addition, the invention proves to be particularly useful for peak shaving purposes in gasification-based combined cycle power plants or in fuel processers, e.g. by injecting a methanol/water (liquid) mixture after the autothermal reformer.

The following catalysts from Haldor Topsøe A/S are suitable for operating the WGS reactor of the plant according to the invention:

Catalyst 1: MK101 - methanol synthesis catalysts comprising copper, zinc and aluminium oxides.

Catalyst 2: MK121 - methanol synthesis catalysts comprising copper, zinc and aluminium oxides.

In one embodiment of the invention, the syngas generation unit comprises a reformer.

Advantageously, the reformer is a steam methane reformer. In one preferred embodiment of the invention, the syngas generation unit comprises a pre-reformer in which a hydrocarbon stream and steam are first pre-reformed in order to obtain methane and then steam-reformed in order to obtain a carbon-monoxide-containing gas, before entering the shift reactor.

Advantageously, unreacted methanol is separated from the shift effluent and recycled to the pre-reformer.

In one preferred embodiment of the invention, the hydrogen purification unit is a pressure swing adsorption unit.

The water gas shift reactor being able to implement one or several steps, in one embodiment, the at least one shift step is a medium temperature or a high temperature shift step. In another embodiment, the medium or high temperature shift step is followed by a low temperature shift step.

According to a further aspect of the invention, a plant is provided for the production of purified hydrogen that is characterized in that at least two purified hydrogen gas streams are produced by at least two separate process lines L1 and L2, the said line L1 comprising at least:

- a hydrocarbon source;
- a syngas generation unit for producing a syngas stream;
- a WGS reactor for producing a hydrogen-enriched gas stream;
- a purification unit for producing a purified hydrogen stream;

the said line L2 comprising at least:

- a hydrocarbon source;
- a syngas generation unit for producing a syngas stream;
- a WGS reactor capable of implementing the endothermic methanol steam reforming reaction:

$$CH_3OH + H_2O \rightarrow 3H_2 + CO_2$$

for producing a hydrogen-enriched gas stream;
- a methanol source with its associated means for supplying the WGS reactor with methanol;
- a purification unit for producing a purified hydrogen stream;

the said lines L1 and L2 being connected together after the syngas generation units and before the WGS reactors by a pipe capable of tapping off a fraction of the syngas stream of Line L1 to the WGS reactor of Line L2 in the event of failure of the syngas generation unit of L2.

Now, if we consider the existence of various hydrogen-consuming units close to one another, and if we consider that these have been created at different times, and that there may be hydrogen production plants that were themselves constructed as and when required, then it is common for there to be several hydrogen production lines side by side. The rapid ageing of the components making up the hot part of the plant, in particular the syngas production reactor, results in breakdowns and therefore a break in supply of syngas from the WGS reactor and therefore a break in hydrogen production of the ageing line in question. The plant according to the invention, as described above, makes it possible, by tapping off a portion of the syngas stream produced by a non-deficient line and by topping up with methanol stored on site, for the WGS reactor of the deficient line, operating according to the invention, to be supplied sufficiently and thus to be capable of producing the hydrogen required. The reduction in syngas production is in this case at least partly compensated for by the top-up with methanol, hydrogen being then produced in the WGS reactor according to the following reactions:

$$CO + H_2O \rightarrow H_2 + CO_2$$

$$CH_3OH + H_2O \rightarrow 3H_2 + CO_2$$

It is obvious that several, or all, of the process lines of the hydrogen production plant may in the same way be advantageously equipped with the WGS of the invention and connected to the appropriate methanol and water sources.

According to another aspect of the invention, a plant for producing purified hydrogen is provided that is characterized in that at least one purified hydrogen gas stream is produced by at least one process line L3, the said line L3 comprising at least:

- a hydrocarbon source;
- a syngas generation unit for producing a syngas stream;
- a WGS reactor capable of implementing the endothermic methanol steam reforming reaction:

$$CH_3OH + H_2O \rightarrow 3H_2 + CO_2$$

for producing a hydrogen-enriched gas stream;
- a methanol source with its associated means for supplying the WGS reactor with methanol;
- a purification unit for producing a purified hydrogen stream;

the plant furthermore including:

- at least one carbon monoxide production unit for producing a carbon monoxide stream;
- at least one pipe connecting the line L3, after the syngas generation unit and before the reactor, to the supply for the said carbon monoxide production unit; and
- at least one pipe connecting the carbon monoxide unit to the line L3, after the WGS reactor and before the hydrogen purification unit, for supplying the purification unit with a hydrogen-enriched stream;

in such a way as to produce carbon monoxide from the hydrocarbon source, while at the same time maintaining the nominal purified-hydrogen production of the plant.

This is because it may happen, for example, that a plant is designed to supply a customer with hydrogen on the basis of a nominal production of "100". Changes in the industrial environment may lead to a requirement for carbon monoxide, produced with high added value. In this case, one solution consists in diverting a fraction of syngas, before it passes into the WGS reactor, in purifying it and exporting the CO produced; unfortunately, this results in a corresponding reduction of hydrogen production. The solution of the invention, as described above, makes it possible, by tapping off a portion of the syngas stream, to produce carbon monoxide, the hydrogen-enriched gas being recovered and reintroduced before purification, while the top-up with methanol stored on the site allows the WGS reactor, operating in accordance with the invention, to be supplied sufficiently and thus be capable of producing the amount of hydrogen required. The reduction in supply of syngas is at least partially compensated for by the top-up with methanol, hydrogen being then produced in the WGS reactor according to the following reactions:

$$CO + H_2O \rightarrow H2 + CO_2$$

$$CH_3OH + H_2O \rightarrow 3H_2 + CO_2$$

The term "nominal capacity" of a plant (or reactor or unit) is understood to mean the capacity for which the plant has been designed for a normal operation corresponding to a given stream of hydrocarbons coming from the hydrocarbon source. The term "nominal production" is understood to mean the production corresponding to the nominal capacity for a normal operation of the plant, that is to say without top-up with methanol.

According to another aspect of the invention, a plant for producing purified hydrogen is provided that is characterized in that at least one purified hydrogen gas stream is produced by at least one process line L4, the said line L4 comprising at least:

- a hydrocarbon source;
- a syngas generation unit for producing a syngas stream;
- a WGS reactor capable of implementing the endothermic methanol steam reforming reaction:

$$CH_3OH + H_2O \rightarrow 3H_2 + CO_2$$

for producing a hydrogen-enriched gas stream;
- a methanol source with its associated means for supplying the WGS reactor with methanol; and
- a hydrogen purification unit for producing a purified hydrogen stream;

furthermore, the WGS reactor, the hydrogen purification unit, the sources, storage tanks and fluid delivery and transport pipes that are associated therewith as well as various other means of the plant being suitable for producing a larger amount of hydrogen than the nominal amount corresponding to the initial stream of hydrocarbons, coming from the source, in such a way as to be capable of at least temporarily increasing the amount of purified hydrogen produced.

This is because, when it is desired to be able to (for example) temporarily boost hydrogen production, in order to switch it from a nominal production of "100" to a temporary production of "120", it is particularly advantageous to be able to design the more expensive hot part of the plant for nominal production of "100", whereas the cold part, located downstream of the syngas production reactor, will be designed for "120". By virtue of the top-up with methanol present on the site, the plant according to the invention described above allows the WGS reactor, operating in accordance with the invention, to produce the additional amount of hydrogen required.

According to yet another aspect of the invention, a plant for producing purified hydrogen is provided that is characterized in that at least one purified hydrogen gas stream is produced by at least one process line L5, the said line L5 comprising at least:

- a hydrocarbon source;
- a syngas generation unit for producing a syngas stream;
- a WGS reactor capable of implementing the endothermic methanol steam reforming reaction:

$$CH_3OH + H_2O \rightarrow 3H_2 + CO_2$$

for producing a hydrogen-enriched gas stream;
- a methanol source with its associated means for supplying the WGS reactor with methanol; and

- a purification unit for producing a purified-hydrogen stream;

the plant furthermore including a source of high-pressure steam for delivering heat to the WGS reactor, and the WGS reactor containing means for condensing the said high-pressure steam without direct exchange, in such a way as to be able to produce purified hydrogen in the event of complete or partial interruption of the production of syngas.

It is in fact, in some cases, not possible to have interconnections with a carbon-monoxide-rich gas that would supply the WGS reactor operating in accordance with the invention with the energy suitable for compensating for the endothermicity of the methanol reforming reaction, and thus allow the WGS reactor to operate using methanol alone. The solution of the invention for solving the problem of the lack of availability of syngas, because of a malfunction of the syngas generation unit in particular, consists in designing a WGS reactor that operates in accordance with the invention as defined above and that furthermore contains means for condensing high-pressure steam, without direct exchange. The term "high-pressure steam" is understood to mean steam at a pressure of between 40 and 100 bar. This high-pressure steam may either be imported or generated for this purpose by means of a dedicated boiler. It thus supplies the necessary heat, corresponding to a temperature of around 240 to 320°C.

Advantageously, when the plant is operating normally, that is to say when the syngas is normally supplied to the WGS reactor and no methanol is needed for producing hydrogen, the condenser may operate as a reboiler, by reversing the direction of flow of the water. The water enters the condenser/reboiler, is vaporized by the exothermicity of the shift reaction and thus supplies steam to the plant for its various requirements.

According to yet another aspect of the invention, a plant for producing purified hydrogen is provided that is characterized in that at least one purified hydrogen gas stream is produced by at least one process line L6, and at least one carbon monoxide source is present on the site of the plant or in the immediate vicinity thereof, the said line L6 comprising at least:

- a hydrocarbon source;
- a syngas generation unit for producing a syngas stream;
- a WGS reactor capable of implementing the endothermic methanol steam reforming reaction:

$$CH_3OH + H_2O \rightarrow 3H_2 + CO_2$$

for producing a hydrogen-enriched gas stream;
- a methanol source with its associated means for supplying the WGS reactor with methanol; and
- a purification unit for producing the purified hydrogen stream from the hydrogen-enriched gas stream coming from the WGS reactor;

furthermore at least a carbon monoxide source is present on the site of the plant or in the immediate vicinity thereof, and a pipe is connecting the carbon monoxide source to the line L6 after the syngas generation unit for producing syngas and before the WGS reactor, in such a way as to substitute carbon monoxide coming from the said source to all or part of the syngas that supplies the WGS reactor in the event of failure of the syngas generation unit.

Thus, if the hydrogen production plant is located near a pipe transporting carbon monoxide, the invention makes it possible, in the event of failure in the syngas generation process, to substitute the syngas with carbon monoxide before entry into the WGS reactor in which, combined with steam and methanol, it produces a mixture consisting mainly of $H_2$ and $CO_2$ according to the following reactions:

$$CO + H_2O \rightarrow H_2 + CO_2$$

$$CH_3OH + H_2O \rightarrow 3H_2 + CO_2$$

Since the heats of reaction approximately balance, the overall reaction is:

$$CO + CH_3OH + 2H_2O \rightarrow 4H_2 + 2CO_2.$$

This demonstrates the economic advantage of the process of the invention which allows a multiplying effect compared with the use of carbon monoxide without methanol.

The invention will now be described with reference to the accompanying drawings in which:

Figure 1 illustrates the water gas shift step of the invention;
Figure 2 illustrates an aspect of the invention in which syngas from a process line L2 is substituted with some of the syngas from a process line L1;
Figure 3 illustrates an aspect of the invention in which a CO flow is produced in addition to the nominal $H_2$ flow produced by the plant;
Figure 4 illustrates an aspect of the invention in which additional $H_2$ is produced by the plant;
Figure 5 illustrates an aspect of the invention in which, in the absence of CO, heat is supplied to the WGS reactor by indirect exchange with high-pressure vapour; and
Figure 6 illustrates an aspect of the invention in which syngas is substituted with CO from a CO-containing pipe present on or near the site.

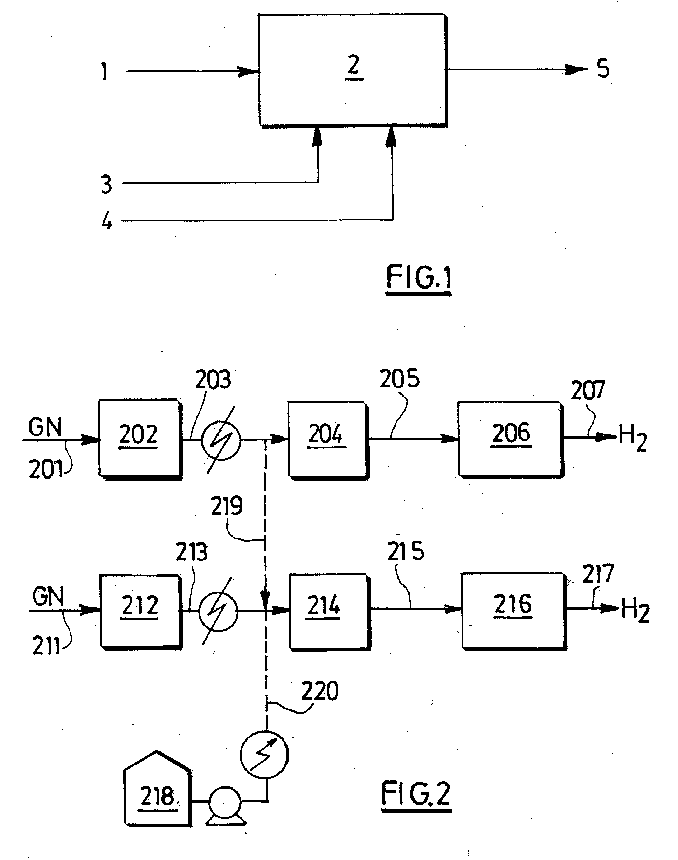

The figure 1 illustrates the WGS step according to the process of the invention. Syngas 1 is injected into a shift section 2. Streams of methanol 3 and water 4 are also injected into the shift section 2 where the shift step occurs. The methanol stream 3 may be added either in liquid form or in vapour form. The water 4 may be added as vapour. The shift section contains catalyst exhibiting activity both for the carbon monoxide shift conversion reaction and the methanol steam reforming reaction. The heat required for the endothermic methanol steam reforming reaction is provided by the heat obtained in the shift conversion reaction. The product is a hydrogen-rich stream 5.

The streams of syngas, methanol and/or water may be mixed or not before being injected into the shift section - they can be in liquid or gaseous form, any combination being possible.

The figure 2 shows a plant according to the invention. It is intended for producing hydrogen from a methane-containing gas, such as natural gas.

It comprises two separate process lines. The first line L1 includes a natural-gas source 201 that supplies a syngas production reactor 202. The syngas stream 203 leaving the reactor 202 supplies a WGS reactor 204 for producing a stream of hydrogen-enriched gas 205 which is then purified in a hydrogen purification unit 206, for example of the pressure swing adsorption type, which delivers as output a purified hydrogen stream 207. The second line L2 includes a natural-gas source 211 that supplies a syngas production reactor 212. The syngas stream 213 output by the reactor 212 supplies a WGS reactor 214 for producing a stream of hydrogen-enriched gas 215 which is then purified in a hydrogen purification unit 216, for example of the pressure swing adsorption type, which delivers as output a purified hydrogen stream 217.

The WGS reactor 214 of the line L2 is a reactor according to the invention. A methanol storage tank 218 supplies, using associated means (not shown), the methanol needed for implementing the invention. A pipe 220, fitted with the necessary devices (pump, reboiler, valve, etc.), connects the methanol storage tank 218 to the line L2 between the reactors 212 and 214. A pipe 219, fitted with the necessary valves and accessories (not shown), connects the lines L1 and L2 together, downstream of the reactors 202 and 212, for example on the output side of the waste heat boilers. The various water circuits and feeds of the plant, including steam for feeding the reactor 214, have not been shown in the figure.

Thus, in the event of a planned or unplanned shutdown of the reactor 212, some of the hot syngas produced by the reactor 202, corresponding for example to 50% of the nominal capacity of the reactor 212, is transferred via the pipe 219 to the reactor 214 and, simultaneously, the reactor 214 is supplied with methanol coming from the storage tank 218, also corresponding for example to 50% of the nominal capacity of the reactor 212. In the reactor 214, the exothermic reaction $CO + H_2O \rightarrow H_2 + CO_2$ makes it possible to compensate for the endothermicity of the reaction $CH_3OH + H_2O \rightarrow 3H_2 + CO_2$ so as to produce a nominal amount of hydrogen corresponding to 100 in the line L2, while the production of the line L1 is 50% of its nominal production.

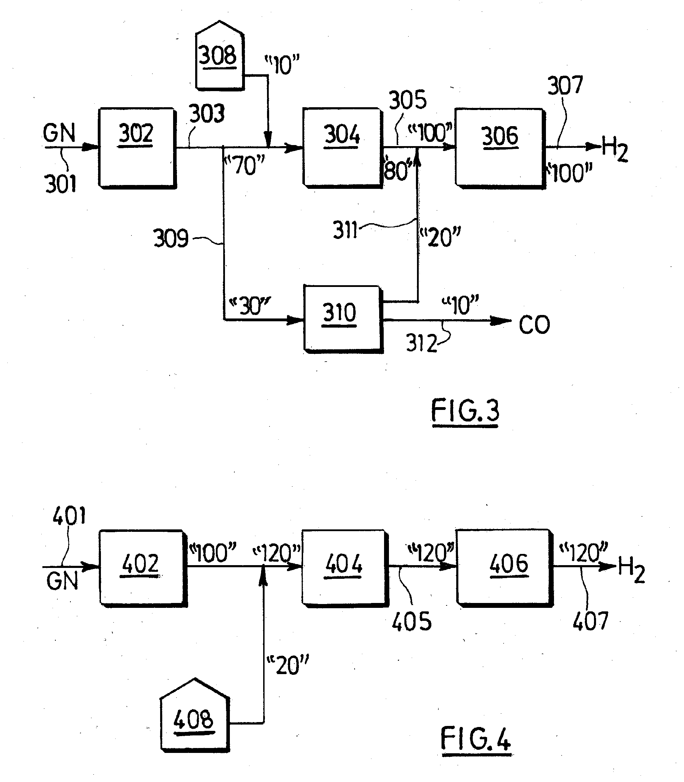

The figure 3 shows another plant according to the invention. It is intended for producing hydrogen from a methane-containing gas, such as natural gas, but also for producing carbon monoxide.

The hydrogen production line L3 includes a natural-gas source 301 which feeds a syngas generation reactor 302. The syngas stream 303 output by the reactor 302 feeds a WGS reactor 304 for producing a stream of hydrogen-enriched gas 305 which is then purified in a hydrogen purification unit 306, for example of the pressure swing adsorption type, which delivers as output a purified hydrogen stream 307. The plant furthermore includes a carbon monoxide production unit 310 for producing a carbon monoxide stream 312. A pipe 309 fitted with the necessary valves and accessories connects the line L3, downstream of the reactor 302 and upstream of the WGS reactor 304, to the CO production unit 310, allowing a portion of the syngas 303 to be taken off in order to be purified in the unit 310 and thus allowing the CO stream 312 to be produced. Moreover, a hydrogen-enriched stream 311 is recovered as output from the unit 310, which stream makes it possible to reincorporate, into the overall hydrogen production process of the line L3, the hydrogen that was present in the portion of the syngas stream taken off for producing the carbon monoxide stream 312. The stream 311 is reincorporated downstream of the WGS reactor 304 and upstream of the hydrogen purification unit 306.

The WGS reactor 304 of the line L3 is a reactor capable of implementing the invention. A methanol storage tank 308 supplies, using associated means (not shown), the methanol needed for implementing the invention. A pipe (not referenced), fitted with the necessary devices (pump, reboiler, valve, etc.), connects the methanol storage tank 308 to the line L3 between the reactors 302 and 304 in such a way so as to feed the reactor 304 with methanol.

Since the plant, designed to supply a customer with hydrogen, is designed on the basis of a nominal $H_2$ production of "100", changes in the industrial environment may result in a requirement for carbon monoxide, produced with high added value. In this case, the plant described here makes it possible, for example by tapping off 30% of the syngas stream 303, to produce carbon monoxide, the hydrogen-enriched gas 311 recovered reincorporates, before purification, about 20% of the nominal hydrogen production, and the methanol top-up feeds the reactor 304 so as to produce the missing 10% of hydrogen and thus produce the required amount of hydrogen. The reduction in the supply of syngas to the WGS reactor 304 is at least partly compensated for by the methanol top-up.

The figure 4 shows another plant according to the invention. It is intended for producing hydrogen from a methane-containing gas, such as natural gas, but in a larger amount than the nominal production of "100" of the plant corresponding to the stream of hydrocarbons coming from the natural gas source used.

The hydrogen production line L4 includes a natural-gas source 401 that feeds a syngas production reactor 402. The syngas stream 403 output by the reactor 402 feeds a WGS reactor 404 for producing a stream of hydrogen-enriched gas 405 which is then purified in a hydrogen purification unit 406, for example of the pressure swing adsorption type, which delivers as output a purified hydrogen stream 407.

The reactor 402, including its output pipe, and the combination of the known conventional devices, that have been shown or not, and constituting the hot part of the line L4, are designed for a nominal production of "100". The line L4 is designed for the additional hydrogen production on the basis of introducing methanol; thus, the WGS reactor 404, the purification unit 406 and the pipes intended for transporting the fluids that are associated therewith are suitable for producing and transporting larger amounts of hydrogen than those of nominal production. Various known, but unmentioned, utilities and conventional components of this type of plant must also be modified according to the requirements of the hydrogen production.

The WGS reactor 404 of the line L4 is a reactor capable of implementing the process of the invention. A methanol storage tank 408 supplies, using associated means (not shown), the methanol needed for implementing the process of the invention. A pipe (not shown) fitted with the necessary devices (pump, reboiler, valve, etc.) connects the methanol storage tank 408 to the line L4 between the reactors 402 and 404 in such a way as to feed the reactor 404 with methanol.

The plant is designed according to the estimated additional requirements; as an example, you may consider the case in which the plant has been designed to be able to raise the hydrogen production to "120" compared with a nominal production of "100". When it is desired to temporarily boost the hydrogen production in order to switch it from the nominal production of "100" to the temporary production of "120", the plant is operated according to the process of the invention and the methanol supplied from the storage tank 408 allows the WGS reactor 404 to produce the additional amount of hydrogen required.

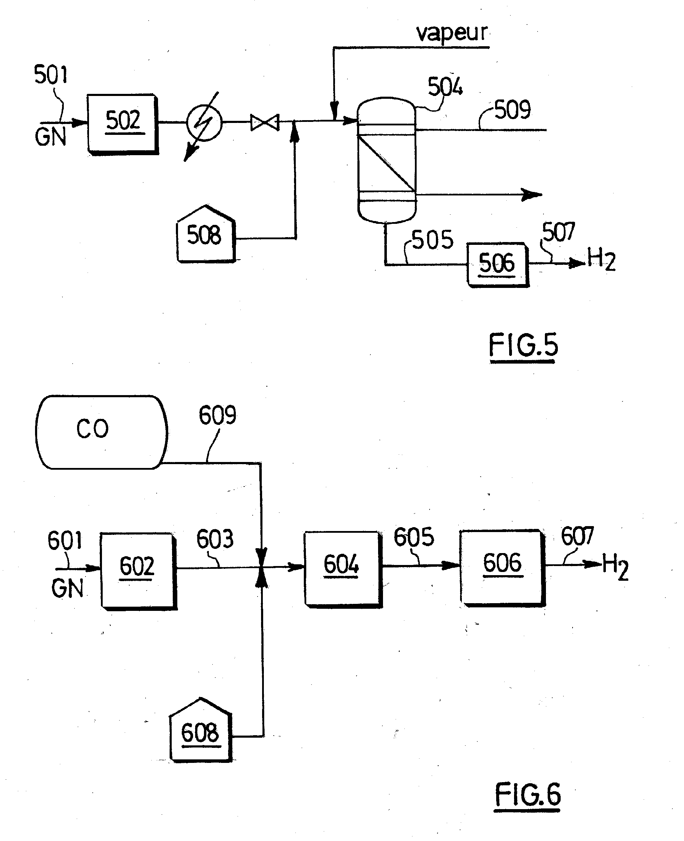

The figure 5 shows another plant according to the invention. Intended to produce, in normal operation, hydrogen from a methane-containing gas, such as natural gas, this plant is also capable of operating in the absence of CO.

The hydrogen production line L5 includes a natural-gas source 501 that feeds a syngas production reactor 502. The syngas stream 503 output by the reactor 502 feeds a WGS reactor 504 for producing a stream of hydrogen-enriched gas 505 which is then purified in a hydrogen purification unit 506, for example of the pressure swing adsorption type, which delivers as output a purified hydrogen stream 507.

The WGS reactor 504 of the line L5 is a reactor according to the invention. A methanol storage tank 508, with its associated means (not shown), supplies the methanol needed. A pipe (not shown) fitted with the necessary devices (pump, reboiler, valve, etc.) connects the methanol storage tank 508 to the line L5 between the reactors 502 and 504, for example downstream of the waste heat boiler, in such a way as to be able to feed the reactor 504 with methanol.

The plant is operated according to the process of the invention, the methanol supplied from the storage tank 408 allowing the WGS reactor 404 to produce additional amount of hydrogen when required.

The WGS reactor 504 is an "isothermal" reactor. It contains means for condensing high-pressure steam, without direct exchange. For this purpose, high-pressure steam is fed from a source 509, delivering steam at a pressure of between 40 and 100 bar approximately - the source 509 may be a boiler dedicated for this production, but the steam may also be imported.

Thus, when the production of syngas 503 is interrupted, completely or partly, and even in the absence of another carbon monoxide source for supplying the WGS reactor 504, the hydrogen production plant may continue to operate. Usually the energy supplied by the CO shift reaction is used by the process of the invention to compensate for the endothermicity of the methanol-reforming reaction according to this aspect of the invention, in the absence of CO, the WGS reactor 504 can operate using methanol, by virtue of the steam that supplies the reactor 504 with the necessary heat, corresponding to a temperature of around 280°C. The hydrogen production is less than that which the WGS reactor would supply if it were also fed with CO, but it is unnecessary to shut down the plant.

Apart from the use described above, the high-pressure steam and the condensed steam are also used to optimize the energy budget of the plant, especially for vaporizing the methanol, for cooling the syngas and for various other requirements.

Advantageously, when the plant is operating normally, that is to say when the syngas is normally supplied to the WGS reactor and no methanol is needed for producing hydrogen, the condenser may operate as a reboiler, by reversing the direction of flow of the water. The water enters the condenser/reboiler, is vaporized by the exothermicity of the shift reaction and thus supplies steam to the plant for its various requirements.

The figure 6 shows another plant according to the invention. It is intended to produce hydrogen from a methane-containing gas, such as natural gas, and is capable of using, in the event of failure of the syngas generation reactor, the available CO supplied, for example, by a pipe located nearby. The plant comprises a process line L6. This line includes a natural-gas source 601 that feeds a syngas production reactor 602. The syngas stream 603 output by the reactor 602 feeds a WGS reactor 604 for producing a stream of hydrogen-enriched gas 605 which is then purified in a hydrogen purification unit 606, for example of the pressure swing adsorption type, that delivers as output a purified hydrogen stream 607. The WGS reactor 604 is a reactor capable of implementing the invention. A methanol storage tank 608 delivers, using associated means (not shown), the methanol needed to implement the process of the invention. A pipe 609 fitted with the necessary devices (pump, reboiler, valve, etc.) connects the methanol storage tank 608 to the line L6 between the reactors 602 and 604. The various water circuits and feeds of the plant, including that for the steam for feeding the reactor 604, have not been shown in the figure.

The plant also includes a pipe that connects the carbon monoxide source 609 to the line L6 after the reactor 602 and before the WGS reactor 604. Thus, in the event of failure of the reactor 602, carbon monoxide coming from the pipe 609 substitutes for syngas 603 for feeding the WGS reactor 604 according to the invention, in which, combined with steam and methanol, a mixture is produced that consists mainly of $H_2$ and $CO_2$ according to the following reactions:

$$CO + H_2O \rightarrow H_2 + CO_2$$

$$CH_3OH + H_2O \rightarrow H_2 + CO_2.$$

Since the heats of reaction approximately balance, the overall reaction is:

$$CO + CH_3OH + 2H_2O \rightarrow 4H_2 + 2CO_2.$$

This demonstrates the economic advantage of the utilisation of this plant of the invention, compared with an installation that uses carbon monoxide without methanol.

In all figures, the syngas stream can be obtained from various sources, for example a steam-reformed gas, a secondary reformer, an autothermal reformer or an upstream pre-reformer. One particular embodiment comprises the process whereby a hydrocarbon stream and steam are first pre-reformed in order to obtain methane and then steam-reformed in order to obtain a carbon-monoxide-containing gas, before entering the shift reactor. After the shift reaction, the hydrogen produced is separated and unconverted methanol is recycled to the pre-reformer. Besides methanol, other similar species such as methyl formate, formaldehyde or formic acid may be used.

The addition of methanol and water in vapour form has the advantage that complicated dispersive elements required to distribute liquid methanol in the shift section are avoided. An additional benefit is the high reactant partial pressure created throughout the shift section. Methanol can be added as a single stream, which is an advantage.

The advantages of the plants according to the invention are:

- the ability to boost hydrogen production above the nominal production;
- the ability to meet a demand for carbon monoxide production while continuing to produce hydrogen;
- partial or complete compensation for any failure of a syngas generation unit by one of the following means:

  • tapping off syngas produced by another process line of the plant,
  • topping up with carbon monoxide available nearby,
  • installation of an isothermal WGS reactor with a high-pressure steam source, capable of operating without being supplied with carbon-monoxide-containing gas.

Any plant which implements any combination of such means or alternative means for the purpose of the invention is intended, and will be recognized by those skilled in the art, to be included within the scope of the invention.

## Claims

1. Hydrogen production plant comprising at least:

   a) a unit for the generation of a syngas;
   b) a water gas shift (WGS) reactor capable of implementing the endothermic methanol steam reforming reaction:

   $$CH_3OH + H_2O \rightarrow 3H_2 + CO_2$$

   c) a hydrogen purification unit.

2. Plant according to Claim 1, in which the syngas generation unit comprises a steam methane reformer.

3. Plant according to either of Claims 1 and 2, in which the syngas generation unit contains a pre-reformer.

4. Plant according to Claim 3, in which unreacted methanol is separated from the shift effluent and recycled to the pre-reformer.

5. Plant according to one of Claims 1 to 4, in which the hydrogen purification unit is a pressure swing adsorption unit.

6. Plant according to one of Claims 1 to 5, **characterized in that** at least two hydrogen gas streams (207, 217) are produced by at least two separate process lines L1 and L2, the said line L1 comprising at least:

   - a hydrocarbon source (201);
   - a syngas generation unit (202) for producing a syngas stream (203);
   - a WGS reactor (204) for producing a hydrogen-enriched gas stream (205);
   - a purification unit (206) for producing a purified hydrogen stream (207);

   the said line L2 comprising at least:

   - a hydrocarbon source (211);
   - a syngas generation unit (212) for producing a syngas stream (213);
   - a WGS reactor (214) capable of implementing the endothermic methanol steam reforming reaction:

   $$CH_3OH + H_2O \rightarrow 3H_2 + CO_2$$

   for producing a hydrogen-enriched gas stream (215);
   - a methanol source (218) with its associated means for supplying the reactor (214) with methanol;
   - a purification unit (216) for producing a purified hydrogen stream (217);

   the said lines L1 and L2 being connected together after the reactors (202) and (212) and before the reactors (204) and (214) by a pipe (219) capable of tapping off a fraction of the syngas stream (203) to the reactor (214) in the event of failure of the reactor (212).

7. Plant according to one of Claims 1 to 5, **characterized in that** at least one hydrogen gas stream (307) is produced by at least one process line L3, the said process line L3 comprising at least:

   - a hydrocarbon source (301);
   - a syngas generation unit (302) for producing a syngas stream (303);
   - a WGS reactor (304) capable of implementing the endothermic methanol steam reforming reaction:

   $$CH_3OH + H_2O \rightarrow 3H_2 + CO_2$$

for producing a hydrogen-enriched gas stream (305);

- a methanol source (308) with its associated means for supplying the reactor (304) with methanol;
- a purification unit (306) for producing a purified hydrogen stream (307);

the plant furthermore including:

- at least one carbon monoxide production unit (310) for producing a carbon monoxide stream (312);
- at least one pipe connecting the line L3, after the reactor (302) and before the reactor (304), to the supply for the said carbon monoxide production unit (310); and
- at least one pipe connecting the unit (310) to the line L3, after the reactor (304) and before the purification unit (306), for supplying the unit (306) with a hydrogen-enriched stream (311);

in such a way as to produce carbon monoxide from the hydrocarbon stream that comes from the source (301), while at the same time maintaining the nominal purified-hydrogen production of the plant.

8. Plant according to one of Claims 1 to 5, **characterized in that** at least one hydrogen gas stream (407) is produced by at least one process line L4, the said line L4 comprising at least:

- a hydrocarbon source (401);
- a syngas generation unit (402) for producing a syngas stream (403);
- a WGS reactor (404) capable of implementing the endothermic methanol steam reforming reaction:

$$CH_3OH + H_2O \rightarrow 3H_2 + CO_2$$

for producing a hydrogen-enriched gas stream (405);

- a methanol source (408) with its associated means for supplying the reactor (404) with methanol; and
- a purification unit (406) for producing a purified hydrogen stream (407);

furthermore the WGS reactor (404), the purification unit (406) and the fluid transport pipes that are associated therewith being suitable for producing larger amounts of hydrogen than the nominal amount corresponding to the initial stream of hydrocarbons coming from the source (401) and feeding the unit (402),

in such a way as to be capable of at least temporarily increasing the amounts of purified hydrogen produced.

9. Plant according to one of Claims 1 to 5, **characterized in that** at least one hydrogen gas stream (507) is produced by at least one process line L5, the said line L5 comprising at least:

- a hydrocarbon source (501);
- a syngas generation unit (502) for producing a syngas stream (503);
- a WGS reactor (504) capable of implementing the endothermic methanol steam reforming reaction:

$$CH_3OH + H_2O \rightarrow 3H_2 + CO_2$$

for producing a hydrogen-enriched gas stream (505);

- a methanol source (508) with its associated means for supplying the WGS reactor (504) with methanol; and
- a purification unit (506) for producing a purified-hydrogen stream (507);

the plant furthermore including a source of high-pressure steam for delivering heat to the WGS reactor (504),
the WGS reactor (504) containing means for condensing the high-pressure steam without direct exchange,
in such a way as to be able to produce purified hydrogen in the event of complete or partial interruption of the production of syngas.

10. Plant according to one of Claims 1 to 5, **characterized in that** at least one hydrogen gas stream is produced by at least one process line L6, the said process line L6 comprising at least:

- a hydrocarbon source (601);
- a syngas generation unit (602) for producing a syngas stream (603);
- a WGS reactor (604) capable of implementing the endothermic methanol steam reforming reaction:

$$CH_3OH + H_2O \rightarrow 3H_2 + CO_2$$

for producing a hydrogen-enriched gas stream (605);

- a methanol source (608) with its associated means for supplying the WGS reactor (604) with methanol; and
- a purification unit (606) for producing the purified hydrogen stream (607) from the hydrogen-enriched gas stream (605) coming from the WGS reactor (604);

furthermore, at least one carbon monoxide source (609) is present on the site of the plant or in the immediate vicinity thereof;

and a pipe is connecting the carbon monoxide source (609) to the line L6 after the reactor (602) for producing syngas and before the WGS reactor (604),

in such a way as to substitute carbon monoxide coming from the said source (609) with all or part of the syngas (603) that supplies the WGS reactor (604) in the event of failure of the reactor (602) that is producing the said syngas.

FIG.1

FIG.2

FIG.3

FIG.4

FIG.5

FIG.6

**European Patent Office**

## EUROPEAN SEARCH REPORT

Application Number

EP 03 07 8403

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/038816 A1 (KEPPELER BERTHOLD) 8 November 2001 (2001-11-08) * the whole document * --- | 1-5,8 | C01B3/16 C01B3/48 C01B3/56 B01D53/047 |
| X | US 5 221 524 A (EGUCHI TOMOKI) 22 June 1993 (1993-06-22) * the whole document * --- | 1-5,8 | |
| A | WO 02 102708 A (BOLTON LESLIE WILLIAM ;WOODFIN WILLIAM TERENCE (GB); BP OIL INT (G) 27 December 2002 (2002-12-27) * page 3, line 10 - line 12 * * page 8, line 9 - page 9, line 29; figure 1 * --- | 3,4 | |
| A | WO 02 051744 A (LACOSTE CHRISTIAN ;AIR LIQUIDE (FR); GAUTHIER PIERRE-ROBERT (FR)) 4 July 2002 (2002-07-04) * page 8, line 32 - page 9, line 26; figure 3 * ----- | 5 | |

TECHNICAL FIELDS SEARCHED (Int.Cl.7)

C01B
B01D

The present search report has been drawn up for all claims

| Place of search | Date of completion of the search | Examiner |
|---|---|---|
| THE HAGUE | 22 March 2004 | Engelen, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

European Patent
Office

Application Number

EP 03 07 8403

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION**
**SHEET B**

Application Number

EP 03 07 8403

The Search Division considers that the present European patent application does not comply with the requirements of unity of invention and relates to several inventions or groups of inventions, namely:

1. Claim : 6

   Hydrogen production plant with at least two hydrogen gas streams that are produced by at least two seperate process lines, wherein the first line comprises at least:
   - a hydrocarbon source
   - a syngas generation unit for producing a syngas stream
   - a WGS reactor for producing a hydrogen-enriched gas stream
   - a purification unit for producing a purified hydrogen stream
   and wherein the second line camprises at least:
   - a hydrocarbon source
   - a syngas generation unit for producing a syngas stream
   - a WGS reactor capable of implementing the endothermic methanol steam reforming reaction, CH3OH + H2O -> 3H2 + CO2, for producing a hydrogen-enriched gas stream
   - a methanol source with its associated means for supplying the WGS reactor with methanol
   - a purification unit for producing a purified hydrogen stream
   Both process lines are connected together after their respective syngas generation units and before their respective WGS reactors by a pipe capable of tapping off a fraction of the syngas stream from the first process line to the WGS reactor of the second process line in the event of failure of the syngas generation unit of the second line.


2. Claim : 7

   Hydrogen production plant with at least one hydrogen gas stream, wherein the process line comprises at least:
   - a hydrocarbon source
   - a syngas generation unit for producing a syngas stream
   - a WGS reactor capable of implementing the endothermic methanol steam reforming reaction, CH3OH + H2O -> 3H2 + CO2, for producing a hydrogen-enriched gas stream
   - a methanol source with its associated means for supplying the WGS reactor with methanol
   - a purification unit for producing a purified hydrogen stream
   - at least one carbon monoxide production unit for producing a carbon monoxide stream
   - at least one pipe connecting the process line after the syngas generation unit and before the WGS reactor to the carbon monoxide production unit
   - at least one pipe connecting the carbon monoxide production unit to the process line after the WGS reactor and before the purification unit, for supplying the purification unit with a hydrogen-enriched stream
   The plant is configured in such a way as to produce carbon

The Search Division considers that the present European patent application does not comply with the requirements of unity of invention and relates to several inventions or groups of inventions, namely:

monoxide from the hydrocarbon stream that comes from the source, while at the same time maintaining the nominal purified-hydrogen production of the plant.

3. Claim : 9

Hydrogen production plant with at least one hydrogen gas stream, wherein the process line comprises at least:
- a hydrocarbon source
- a syngas generation unit for producing a syngas stream
- a WGS reactor capable of implementing the endothermic methanol steam reforming reaction, $CH_3OH + H_2O \rightarrow 3H_2 + CO_2$, for producing a hydrogen-enriched gas stream
- a methanol source with its associated means for supplying the WGS reactor with methanol
- a purification unit for producing a purified hydrogen stream
- a source of high-pressure steam for delivering heat to the WGS reactor
- means (in the WGS reactor) for condensing the high-pressure steam without direct exchange
The plant is configured in such a way as to be able to produce purified hydrogen in the event of complete or partial interruption of the production of syngas.

4. Claim : 10

Hydrogen production plant with at least one hydrogen gas stream, wherein the process line comprises at least:
- a hydrocarbon source
- a syngas generation unit for producing a syngas stream
- a WGS reactor capable of implementing the endothermic methanol steam reforming reaction, $CH_3OH + H_2O \rightarrow 3H_2 + CO_2$, for producing a hydrogen-enriched gas stream
- a methanol source with its associated means for supplying the WGS reactor with methanol
- a purification unit for producing a purified hydrogen stream
- at least one carbon monoxide source
- a pipe connecting the carbon monoxide source to the process line after the a syngas generation unit and before the WGS reactor
The plant is configured in such a way as substitute carbon monoxide from the carbon monoxide source with all or part of the syngas that supplies the WGS reactor in the event of the syngas generation unit.

**ANNEX TO THE EUROPEAN SEARCH REPORT
ON EUROPEAN PATENT APPLICATION NO.**

EP 03 07 8403

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2004

| Patent document cited in search report | | Publication date | Patent family member(s) | | Publication date |
|---|---|---|---|---|---|
| US 2001038816 | A1 | 08-11-2001 | DE | 10010070 A1 | 20-09-2001 |
| | | | EP | 1129987 A1 | 05-09-2001 |
| US 5221524 | A | 22-06-1993 | JP | 2755804 B2 | 25-05-1998 |
| | | | JP | 5306101 A | 19-11-1993 |
| WO 02102708 | A | 27-12-2002 | WO | 02102708 A1 | 27-12-2002 |
| WO 02051744 | A | 04-07-2002 | EP | 1219566 A1 | 03-07-2002 |
| | | | EP | 1353875 A1 | 22-10-2003 |
| | | | WO | 02051744 A1 | 04-07-2002 |

EPO FORM P0459

For more details about this annex : see Official Journal of the European Patent Office, No. 12/82